# DEMANDE DE BREVET EUROPEEN

(11) **EP 1 858 147 A2**
(43) Date de publication de la demande: **21.11.2007**
(21) Numéro de dépôt: 07290615.9
(22) Date de dépôt: 15.05.2007
(51) Int. Cl.: H02M 7/06, H02H 9/00

(54) **Circuit de conversion de courant**

(30) Priorité: 18.05.2006 FR 0604471
(71) Demandeur: Converteam SAS, 91300 Massy (FR)
(72) Inventeur: Gollentz Bernard, 68360 Soultz (FR)
(74) Mandataire: Blot, Philippe Robert Emile

(57) **Abrégé**

L'invention concerne un circuit pour la précharge du condensateur de sortie (26) d'un circuit de conversion de courant, ledit circuit de conversion de courant comportant :
- une entrée (18) d'alimentation en courant alternatif et une sortie (28) continue ;
- un transformateur de puissance (20) relié à l'entrée d'alimentation (18) ;
- des moyens (22) d'enclenchement de l'alimentation du transformateur de puissance (20) ; et
- au moins un redresseur (24 ; 124A, 124B ; 224A, 224B) relié en sortie du transformateur de puissance (20) ;
le condensateur (26) étant connecté en sortie du redresseur (24 ; 124A, 124B ; 224A, 224B).

Le circuit de précharge est connecté audit circuit de conversion de courant à l'entrée dudit redresseur (24 ; 124A, 124B ; 224A, 224B).

## Description

La présente invention concerne un circuit pour la précharge du condensateur de sortie d'un circuit de conversion de courant, ledit circuit de conversion de courant comportant :
- une entrée d'alimentation en courant alternatif et une sortie propre à délivrer un courant continu ;
- au moins un transformateur de puissance relié à l'entrée d'alimentation pour recevoir en entrée un courant alternatif ;
- des moyens d'enclenchement de l'alimentation du transformateur de puissance ; et
- au moins un redresseur relié en sortie du transformateur de puissance ;
ledit condensateur étant connecté en sortie du redresseur ;
ledit circuit de précharge étant connecté audit circuit de conversion de courant.

Les moyens de propulsion, notamment de navires de grandes tailles, nécessitent la mise en oeuvre de transformateurs de puissance pour la mise en forme et notamment l'alimentation par des courants à fréquences variables d'un moteur électrique de propulsion.

Un tel transformateur est intégré dans un circuit de conversion de courant permettant de transformer un courant alternatif, et notamment triphasé, produit par un alternateur, en un courant continu, propre à alimenter un moteur électrique au travers d'un régulateur comportant un ensemble de transistors notamment de type IGBT.

Dans le circuit de conversion de courant, la sortie du transformateur est reliée à un redresseur, par exemple à diodes, dont la sortie est connectée à un condensateur aux bornes duquel est définie la sortie propre à délivrer le courant continu. Un tel circuit est décrit dans le document DE-A-3507318.

Initialement, tant que le transformateur n'est pas alimenté, le condensateur est déchargé. Ainsi, en l'absence de charge initiale du condensateur, la tension aux bornes du condensateur, lors de l'enclenchement de l'alimentation du transformateur, est transitoirement égale au double de la tension nominale en sortie du circuit de conversion de courant. La tension ne peut redescendre après l'enclenchement initial de l'alimentation du transformateur du fait du redresseur à diodes.

Pour éviter ce phénomène, il est connu de prévoir dans le circuit de conversion des moyens de précharge du condensateur. Ces moyens sont propres à assurer une charge du condensateur avant l'enclenchement de l'alimentation du transformateur de puissance.

Le document EP-A-1024574 décrit un tel circuit dans lequel des moyens de précharge sont susceptibles d'être connectés directement aux bornes du condensateur, en sortie du redresseur. Un tel circuit présente toutefois l'inconvénient de nécessiter une source continue spécialement dédiée à la précharge du condensateur.

Un tel dispositif de précharge est donc relativement coûteux à mettre en oeuvre.

L'invention a pour but de proposer un circuit de conversion de courant permettant d'éviter une surtension initiale aux bornes des condensateurs et dont le coût est réduit. A cet effet, l'invention a pour objet un circuit pour la précharge du condensateur de sortie d'un circuit de conversion de courant, ledit circuit de conversion de courant comportant :
- une entrée d'alimentation en courant alternatif et une sortie propre à délivrer un courant continu ;
- au moins un transformateur de puissance relié à l'entrée d'alimentation pour recevoir en entrée un courant alternatif ;
- des moyens d'enclenchement de l'alimentation du transformateur de puissance ; et
- au moins un redresseur relié en sortie du transformateur de puissance ; ledit condensateur étant connecté en sortie du redresseur ;
ledit circuit de précharge étant connecté audit circuit de conversion de courant ;
ledit circuit de précharge étant connecté audit circuit de conversion de courant à l'entrée dudit redresseur.

L'idée à la base de l'invention a donc consisté à appliquer le courant de précharge du condensateur de sortie du redresseur, non plus du côté continu de ce dernier, mais du côté alternatif (il s'agit donc d'un courant alternatif), et à utiliser le redresseur même du convertisseur pour mettre en forme ce courant de précharge.

Dans un mode de réalisation particulier de l'invention, le circuit de précharge comporte un transformateur auxiliaire propre à être alimenté par ledit courant alternatif, et des moyens d'enclenchement de l'alimentation du transformateur auxiliaire avant l'enclenchement de l'alimentation du transformateur de puissance, la sortie dudit transformateur auxiliaire étant connectée à l'entrée dudit redresseur.

Le courant alternatif utilisé à la précharge du condensateur est ainsi directement issu de l'alimentation du convertisseur.

Il est par ailleurs connu dans ce type de circuit de conversion de courant que, lors de l'enclenchement initial de l'alimentation, le courant en sortie du transformateur est très élevé du fait de la saturation de celui-ci, le courant pouvant atteindre des intensités dix fois supérieures au courant nominal du transformateur.

Pour résoudre cet autre problème, la sortie du transformateur auxiliaire peut être reliée en outre à la sortie du transformateur de puissance pour assurer une magnétisation du transformateur de puissance avant l'enclenchement de l'alimentation du transformateur de puissance.

Le dispositif réalise donc dans ce cas, en même temps que la précharge du condensateur, la pré-magnétisation du transformateur de puissance, et réduit ainsi son courant à l'enclenchement.

On observera que l'utilisation d'un transformateur auxiliaire pour la prémagnétisation du transformateur de puissance d'un convertisseur est déjà connue en soi par le document DE-A-4309484.

Suivant des modes particuliers de réalisation, le circuit de conversion de courant comporte en outre l'une ou plusieurs des caractéristiques suivantes :
- le rapport de la puissance du transformateur de puissance sur la puissance du transformateur auxiliaire et supérieur à 50 ;
- le courant à pleine charge du transformateur auxiliaire est compris entre la moitié et le double du courant à vide du transformateur de puissance ;
- la puissance du transformateur auxiliaire est inférieure à une centième de la puissance du transformateur de puissance ;
- il comporte des moyens d'interruption de l'alimentation du transformateur auxiliaire après l'enclenchement de l'alimentation du transformateur de puissance et des moyens de connexion d'au moins un capteur de mesure à l'entrée du transformateur auxiliaire ;
- le circuit de conversion de courant comporte au moins deux redresseurs et le circuit de précharge n'est connecté à l'entrée que d'un redresseur.

L'invention sera mieux comprise à la lecture de la description qui va suivre, donnée uniquement à titre d'exemple et faite en se référant aux dessins sur lesquels :
- la figure 1 est une vue schématique d'un circuit de conversion de courant selon l'invention ; et
- les figures 2 et 3 sont des vues identiques à celles de la figure 1 de deux autres variantes de réalisation.

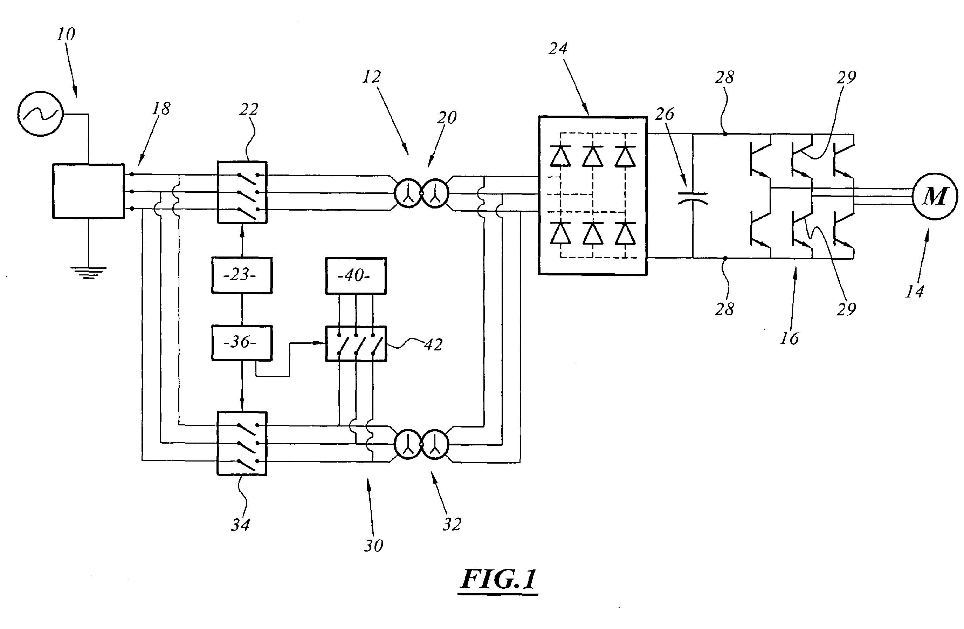

L'installation illustrée sur la figure 1 est par exemple la chaîne de propulsion d'un navire. Elle comporte une source d'alimentation 10 en courant alternatif triphasé, un circuit 12 de conversion de courant alimenté par la source 10 et un moteur électrique 14 relié en sortie du circuit de conversion de courant 12 au travers d'un régulateur 16. Le circuit de conversion de courant 12 est propre à fournir un courant continu.

La source de courant alternatif triphasé 10 est formée par exemple d'un alternateur entraîné par un moteur thermique.

Le circuit de conversion de courant 12 comporte une entrée 18 d'alimentation connectée à un transformateur de puissance 20 au travers d'organes de commutation 22 permettant l'enclenchement ou l'interruption de l'alimentation du transformateur depuis l'entrée 18. Les organes de commutation 22 sont commandés par une unité de pilotage 23.

Le transformateur 20 a une puissance très élevée, supérieure à 3 MVA. Sa puissance est par exemple égale à 7 MVA.

Le circuit de conversion de courant 12 comporte un redresseur 24 dont l'entrée est reliée à la sortie du transformateur 20. Comme connu en soi, le redresseur 24 comporte, par exemple, un ensemble de diodes, chacune connectée entre une phase en sortie du transformateur et une borne de sortie du redresseur, les diodes reliées à une même phase étant connectées à l'inverse vers les deux bornes de sortie.

Un condensateur de forte capacité 26 est connecté entre les bornes de sortie du redresseur 24.

La sortie notée 28 du circuit de conversion 12 est définie aux bornes du condensateur 26.

Comme connu en soi, le régulateur 16 comporte un réseau de transistors 29 de type IGBT commandés pour relier séquentiellement les bornes du moteur 14 aux bornes de sortie 28 du circuit de conversion.

Un circuit 30 de précharge du condensateur 26 avant l'enclenchement de l'alimentation du transformateur de puissance 20 est en outre connecté au circuit de conversion proprement dit 12, à l'entrée du redresseur 24. Ces moyens de précharge 30 comportent un transformateur auxiliaire 32 triphasé relié par des organes de commutation 34 à une source d'alimentation. Avantageusement, le transformateur 32 est relié pour son alimentation au travers des moyens de commutation 34 à l'entrée 18 du circuit de conversion, de sorte que les transformateurs principal 20 et auxiliaire 32 sont alimentés par la même source 10.

Les moyens de commutation 34 sont pilotés pour permettre l'enclenchement de l'alimentation du transformateur 32 ou son interruption par une unité de pilotage 36, elle-même connectée à l'unité de pilotage 23 pour assurer un séquencement du déclenchement de l'alimentation des deux transformateurs, comme cela sera décrit ultérieurement.

La sortie du transformateur 32 est reliée à l'entrée du redresseur 24. Elle est également reliée ici directement à la sortie du transformateur de puissance 20.

Le transformateur auxiliaire 32 a une puissance très inférieure à la puissance du transformateur de puissance. Avantageusement, sa puissance est au moins cinquante fois inférieure à celle du transformateur de puissance 20. Ainsi, pour un transformateur de puissance 20 de 7 MVA, la puissance du transformateur auxiliaire 32 est par exemple égale à 70 kVA. De préférence, le rapport des puissances entre le transformateur de puissance du transformateur auxiliaire est supérieur ou égal à 100 et est notamment de l'ordre de 200.

Le transformateur auxiliaire 32 est choisi de sorte que le courant fourni à pleine charge soit compris entre la moitié et le double du courant à vide du transformateur de puissance 20. De préférence, le courant à pleine charge du transformateur auxiliaire est sensiblement égal au courant à vide du transformateur de puissance.

Ainsi, par exemple si le transformateur de puissance absorbe un courant à vide de l'ordre de 10 ampères, le transformateur auxiliaire est choisi pour fournir un courant de sortie de 10 ampères afin d'assurer une magnétisation initiale du transformateur de puissance.

En outre un ou plusieurs capteurs 40 sont connectés, par l'intermédiaire de moyens de commutation 42, à l'entrée, c'est-à-dire au circuit primaire du transformateur auxiliaire 32. Ainsi, les capteurs sont isolés de la sortie du transformateur de puissance 20 par le transformateur 32.

Les moyens de commutation 42 sont pilotés par l'unité 36 pour assurer une connexion des capteurs 40 seulement lorsque les moyens de commutation 34 sont ouverts.

Les unités de pilotage 23 et 36 sont synchronisées pour assurer un déclenchement successif des alimentations des transformateurs lors de la mise en route de l'installation.

En particulier, le transformateur auxiliaire 32 est d'abord alimenté par fermeture des organes de commutation 34, assurant ainsi d'abord une magnétisation du transformateur 20 et, simultanément, une charge préalable du condensateur 26 est réalisée à partir du courant fourni par le transformateur auxiliaire 32 redressé par le redresseur 24.

Après quelques secondes, temps nécessaire à la magnétisation du transformateur de puissance et la charge du condensateur 26, les organes de commutation 22 sont fermés sous la commande des moyens 23 pour enclencher l'alimentation du transformateur de puissance 20.

Compte tenu de la charge préalable du condensateur 26, les surtensions aux bornes du condensateur sont évitées.

De plus, compte tenu de la magnétisation du transformateur de puissance, les courants d'enclenchement très élevés constatés en entrée du transformateur, du fait de la saturation de celui-ci, sont également évités.

Le redresseur 24 étant utilisé tant pour le redressement du courant issu du transformateur de puissance 20 lors du fonctionnement du moteur que pour le redressement du courant servant à charger le condensateur 26, le circuit de pré-charge et de pré-magnétisation est simple à réaliser et d'un coût réduit.

Ainsi, le circuit remplit deux fonctions simultanées dans le convertisseur de fréquence, à savoir la pré-charge des condensateurs et la pré-magnétisation du transformateur de puissance, alimentant le convertisseur de fréquence. Ceci permet la limitation du courant d'enclenchement du transformateur à une valeur inférieure au courant nominal de ce dernier.

De plus, un même redresseur étant utilisé pour le courant issu des deux transformateurs, les risques de pannes sont réduits, du fait de la diminution du nombre de composants mis en oeuvre.

Par ailleurs, après la phase initiale de mise en fonctionnement du moteur, les moyens de commutation 34 sont ouverts et le transformateur 32 peut être utilisé pour effectuer des mesures par l'intermédiaire des capteurs 30 connectés aux bornes du circuit primaire du transformateur auxiliaire 32.

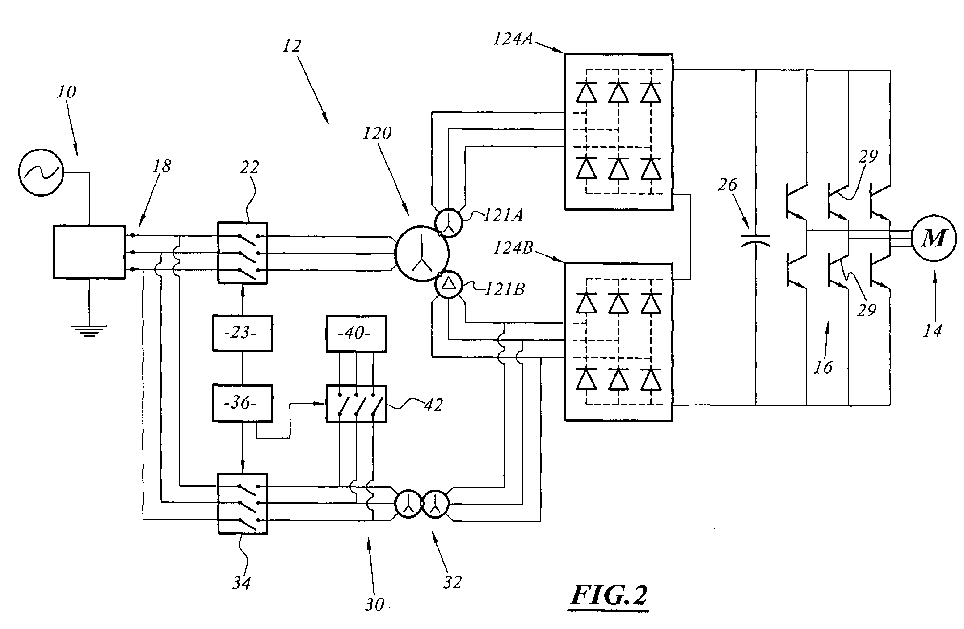

Dans le mode de réalisation de la figure 2, le transformateur de puissance 120 est un transformateur dodécaphasé comportant comme connu en soi un bobinage primaire et deux bobinage secondaires 121A, 121B, l'un connecté en étoile et l'autre connecté en triangle. Chaque bobinage secondaire alimente un redresseur 124 A, 124 B constitué chacun d'un pont de diodes. Ici, la sortie du transformateur auxiliaire 32 est connectée entre un unique bobinage secondaire 121 B et l'entrée du redresseur associé 124.

Plus généralement, dans le cas d'un transformateur de puissance à sorties multiples, tel qu'un transformateur à dix-huit phases, le transformateur auxiliaire est un transformateur triphasé simple dont la sortie est reliée à seulement un groupe de phases du transformateur de puissance.

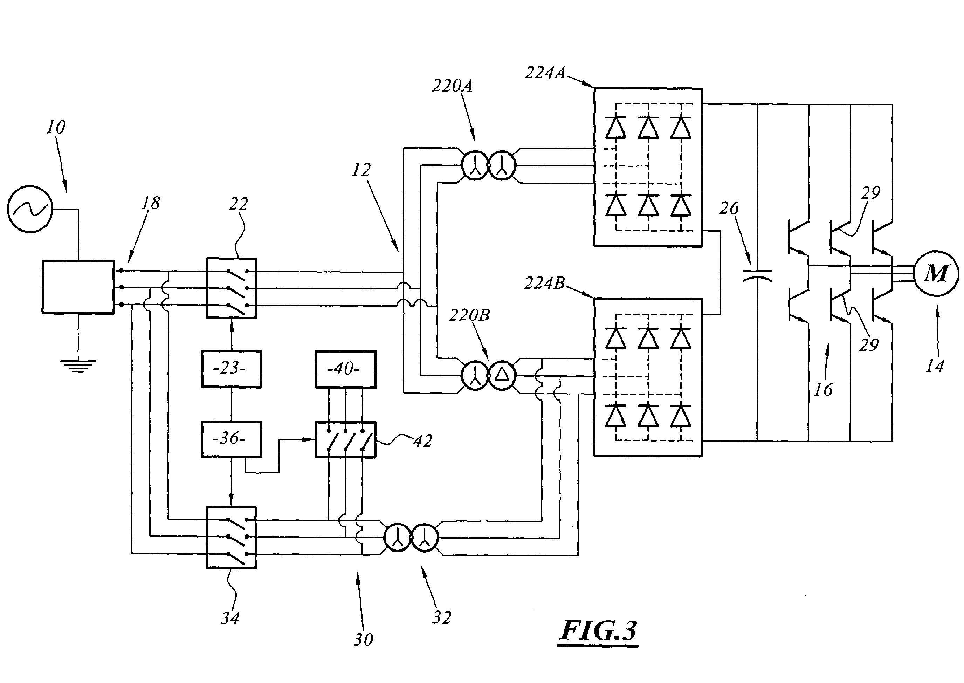

Dans le mode de réalisation de la figure 3, le transformateur de puissance est remplacé par deux transformateur de puissance 220A, 220B montés en parallèles en sortie des organes de commutations 22 et chacun associé à un redresseur propre 224A, 224B. Comme dans le mode de réalisation précédent, la sortie du transformateur auxiliaire 32 n'est connectée qu'entre un unique transformateur de puissance 220B et le redresseur associé 224B.

## Revendications

1. Circuit pour la précharge du condensateur de sortie (26) d'un circuit de conversion de courant, ledit circuit de conversion de courant comportant :
- une entrée (18) d'alimentation en courant alternatif et une sortie (28) propre à délivrer un courant continu ;
- au moins un transformateur de puissance (20) relié à l'entrée d'alimentation (18) pour recevoir en entrée un courant alternatif ;
- des moyens (22) d'enclenchement de l'alimentation du transformateur de puissance (20) ; et
- au moins un redresseur (24 ; 124A, 124B ; 224A, 224B) relié en sortie du transformateur de puissance (20) ;
ledit condensateur (26) étant connecté en sortie du redresseur (24 ; 124A, 124B ; 224A, 224B) ;
ledit circuit de précharge étant connecté audit circuit de conversion de courant ;
**caractérisé en ce que** ledit circuit de précharge est connecté audit circuit de conversion de courant à l'entrée dudit redresseur (24 ; 124A, 124B ; 224A, 224B).

2. Circuit selon la revendication 1, **caractérisé en ce qu'**il comporte un transformateur auxiliaire (32) propre à être alimenté par ledit courant alternatif, et des moyens (22, 24, 34, 36) d'enclenchement de l'alimentation du transformateur auxiliaire (32) avant l'enclenchement de l'alimentation du transformateur de puissance (20), la sortie dudit transformateur auxiliaire étant connectée à l'entrée dudit redresseur (24 ; 124A, 124B ; 224A, 224B).

3. Circuit selon la revendication 2, **caractérisé en ce que** la sortie du transformateur auxiliaire (32) est reliée en outre à la sortie du transformateur de puissance (20) pour assurer une magnétisation du transformateur de puissance (20) avant l'enclenchement de l'alimentation du transformateur de puissance (20).

4. Circuit selon l'une quelconque des revendications précédentes, **caractérisé en ce que** le rapport de la puissance du transformateur de puissance (20) sur la puissance du transformateur auxiliaire (32) est supérieur à 50.

5. Circuit selon l'une quelconque des revendications précédentes, **caractérisé en ce que** le courant à pleine charge du transformateur auxiliaire (32) est compris entre la moitié et le double du courant à vide du transformateur de puissance (20).

6. Circuit selon l'une quelconque des revendications précédentes, **caractérisé en ce que** la puissance du transformateur auxiliaire (32) est inférieure à une centième de la puissance du transformateur de puissance (20).

7. Circuit selon l'une quelconque des revendications précédentes, **caractérisé en ce qu'**il comporte des moyens (34, 36) d'interruption de l'alimentation du transformateur auxiliaire (32) après l'enclenchement de l'alimentation du transformateur de puissance (20) et des moyens (42) de connexion d'au moins un capteur de mesure (40) à l'entrée du transformateur auxiliaire (32).

8. Circuit selon l'une quelconque des revendications précédentes, **caractérisé en ce que** le circuit de conversion de courant comporte au moins deux redresseurs (124A, 124B ; 224A, 224B) et **en ce que** le circuit de précharge n'est connecté à l'entrée que d'un redresseur (124B ; 224B).
